# EUROPEAN PATENT APPLICATION

(11) **EP 2 144 235 A1**
(43) Date of publication of application: **13.01.2010**
(21) Application number: 09305551.5
(22) Date of filing: 16.06.2009
(51) Int. Cl.: G11B 7/005, G11B 7/0065

(54) **Apparatus for reading from an optical recording medium**

(30) Priority: 30.06.2008 EP 08159346
(71) Applicant: Thomson Licensing, 92100 Boulogne-Billancourt (FR)
(72) Inventor: Winter, Marco, 30659 Hannover (DE); Gandolph, Dirk, 30952 Ronnenberg (DE); Schewzow, Andrej, 30163 Hannover (DE)
(74) Representative: Schmidt-Uhlig, Thomas

(57) **Abstract**

The invention relates to an apparatus for reading from an optical recording medium (8), and more specifically to an apparatus suitable for reading from an optical recording medium (8) having a high data density.

According to the invention, the apparatus has:
- a light source (2) for generating a first light beam (3);
- means (2') for generating a second light beam (3'), which has a different wavelength than the first light beam (3);
- one or more focusing means (7) for focusing the first light beam (3) and the second light beam (3') onto the optical recording medium (8) to form a first light spot (30, 30', 30", 40) and a second light spot (31, 31', 31", 41), wherein the second light spot (31, 31', 31", 41) is larger than the first light spot (30, 30', 30", 40) and physically and/or virtually encompasses the first light spot (30, 30', 30", 40);
- one ore more detectors (11) for detecting a first light beam (9) and a second light beam (9') reflected by the optical recording medium (8); and
- means for generating a data signal from the difference between the detected first and second reflected light beams (9, 9').

## Description

The invention relates to an apparatus for reading from an optical recording medium. More specifically, the apparatus is suitable for reading from an optical recording medium having a high data density.

Digital data are usually stored on optical recording media as binary data in the form of information elements, e.g. as pits. These elements are generally distributed over one or more plane surfaces within the medium, called information layers. In the case of a conventional optical disk, e.g. a Compact Disk (CD), Digital Versatile Disk (DVD), or BluRay Disk (BD), the information elements of the same layer are distributed in a spiral track or concentric circular tracks.

The maximum storage density on an information layer is limited by the minimum size of the information elements and by the minimum distance between adjacent tracks, the so called track pitch. In order to increase the data density, it is desirable to reduce the minimum size of the information elements and the track pitch as much as possible.

In practice, however, in order to be able to read the stored data by conventional optical detection means, this minimum size and the track pitch are determined by the wavelength of the light used for the optical detection. This is due to the fact that the light beam used for reading a track can only be focused to a minimum diameter, which is determined by the diffraction limit and the beam quality.

In this respect, document US 5,394,381 discloses an optical pickup apparatus, which includes a beam splitter for splitting a light beam into two partial beams having orthogonal directions of polarization. The two partial light beams are transformed into circularly polarized light beams and focused onto a magneto-optical disc so that the two beam spots are partially superimposed. In the superposition area the resulting beam spot has a linear polarization, which allows to detect magnetic information elements on the optical disc, whose size is smaller than the spot size of the two light beams. In the area of the beam spots outside the superposition area the light beams are not influenced by the magnetic information elements, as they remain circularly polarized. This solution is only feasible for magneto-optical recording media.

Similarly, US 5,625,613 discloses a super-resolution scanning optical system, in which two light beams are incoherently superimposed on an optical recording medium. One of the light beams is a double-humped light beam having its center in the same position as that of the other light beam. Data are obtained by determining a difference signal from the signals obtained by the two light beams. This solution allows to reduce either the track pitch or the size of the information elements along the track, depending on how the double-humped light beam is arranged relative to the track. In addition, it is rather difficult to generate the required double-humped light beam with the necessary precision.

US 6,370,092 discloses an optical pickup that generates two light spots of different size on an optical recording medium. The second light spot fully encompasses the first light spot and is used for reducing crosstalk. A data signal is generated using the difference of the detected first and second light spot.

WO 92/03821 discloses an optical scanning device for a magneto-optical recording medium having pits and magnetic domains. A data signal is generated from two light spots that are virtually superimposed using a delay element.

It is an object of the present invention to propose an improved apparatus for reading from optical recording media having a high data density.

According to the invention, the apparatus has:
- a light source for generating a first light beam;
- means for generating a second light beam having a different wavelength than the first light beam;
- one or more focusing means for focusing the first light beam and the second light beam onto the optical recording medium to form a first light spot and a second light spot, wherein the second light spot is larger than the first light spot and physically and/or virtually encompasses the first light spot;
- one ore more detectors for detecting a first light beam and a second light beam reflected by the optical recording medium; and
- means for generating a data signal from the difference between the detected first and second reflected light beams.

Similarly, a method for reading from an optical recording medium has the steps of:
- generating a first light beam and a second light beam, the second light beam having a different wavelength than the first light beam;
- focusing the first light beam and the second light beam onto the optical recording medium to form a first light spot and a second light spot, wherein the second light spot is larger than the first light spot and physically and/or virtually encompasses the first light spot;
- detecting a first light beam and a second light beam reflected by the optical recording medium; and
- generating a data signal from the difference between the detected first and second reflected light beams.

According to the invention two light spots of different size are formed on an information layer of the optical recording medium. The larger light spot fully overlaps with the smaller light spot. This overlap is either physical, i.e. both light spots are formed at the same position at the same time, or it is virtual. In the latter case the two light spots have different physical positions on the information layer. However, the signals obtained by the two light beams are temporally shifted relative to each other, e.g. by a delay element, in such way that the two signals correspond to signals obtained at the same position. In any case the evaluation circuitry receives signals from two overlapping light spots, where the second light spot fully encompasses the first light spot. An idea of the invention is that such a part of the larger light spot, which is not also covered by the smaller light spot, constitutes the effective light spot used for reading data. In other words, the effective size of the reading light spot is the size of the difference area of the two light spots. The second light beam has a different wavelength than the first light beam. Many of today's drives for optical recording media already have two or more light sources for different types of optical recording media. Therefore, in such drives only a rather limited number of additional components is necessary for implementing the invention. In addition, the different wavelengths allow for an easy separation of the two reflected light beams for data detection.

Advantageously, the second light beam is generated by a further light source. This has the advantage that it becomes easier to individually control and to adapt the properties of the two light beams. The solution further offers the possibility to provide separate optical paths for the two light beams. This reduces the quality requirements of the optical components, which in this case do not need to be optimized for two simultaneous light beams.

Advantageously, a beam shaping element is provided for modifying the shape or the cross section or an optical property of the light beam, and thus the shape of the first light spot and/or the second light spot on the layer of the optical recording medium on which the light beam is focused. This allows to reduce an interference from neighboring tracks of the optical recording medium in the data signal. Such an interference is otherwise caused when the difference area between the two light spots does not only fall onto an addressed track, but also partly on a neighboring track.

Favorably, means are provided for generating a further data signal from the detected first reflected light beam. Especially when the two light beams have different wavelengths, the first light spot may have a size that is sufficiently small to read data from the optical recording medium. In this case the first light spot is advantageously used for reading data from one track, whereas the difference area of the overlapping light spots is used for reading data from a neighboring track. In this way the achievable data rate is increased.

For a better understanding the invention shall now be explained in more detail in the following description with reference to the figures. It is understood that the invention is not limited to this exemplary embodiment and that specified features can also expediently be combined and/or modified without departing from the scope of the present invention. In the figures:
- Fig. 1: schematically shows a prior art pickup for reading from an optical recording medium;
- Fig. 2: schematically depicts a pickup according to the invention for reading from an optical recording medium;
- Fig. 3: illustrates the superposition of two light spots of different size to obtain a light spot of reduced size;
- Fig. 4: illustrates the superposition of two light spots having an extended size in a track direction;
- Fig. 5: schematically depicts the superposed light spots of Fig. 3 relative to the tracks of an optical recording medium;
- Fig. 6: illustrates the superposition of specially shaped light spots on an optical recording medium;
- Fig. 7: schematically shows the generation of a specially shaped light spot; and
- Fig. 8: illustrates a further superposition of two light spots to obtain a light spot of reduced size.

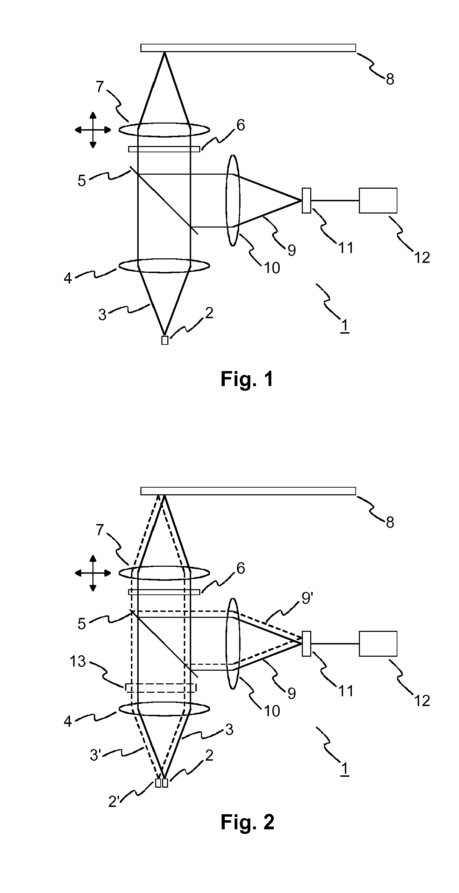

In Fig. 1 a prior art pickup 1 for reading from an optical recording medium 8 is shown schematically. A laser diode 2 emits a linearly polarized light beam 3, which is collimated by a collimator lens 4. The collimated light beam 3 passes a polarization beam splitter 5 and a quarter wave plate 6, which transforms the light beam 3 into a circular polarized light beam 3, before it is focused onto an optical recording medium 8 by an objective lens 7. The light beam 9 reflected by the optical recording medium 8 is collimated by the objective lens 7 and passes the quarter wave plate 6, which transforms the reflected light beam 9 into a linear polarized light beam 9. Due to the quarter wave plate 6, the direction of polarization of the reflected light beam 9 is perpendicular to the direction of polarization of the initial light beam 3. The reflected light beam 9 is thus deflected by the polarization beam splitter 5 towards a focusing lens 10, which focuses the reflected light beam 9 onto a detector 11.

An evaluation circuitry 12 evaluates the signals obtained by the detector 11.

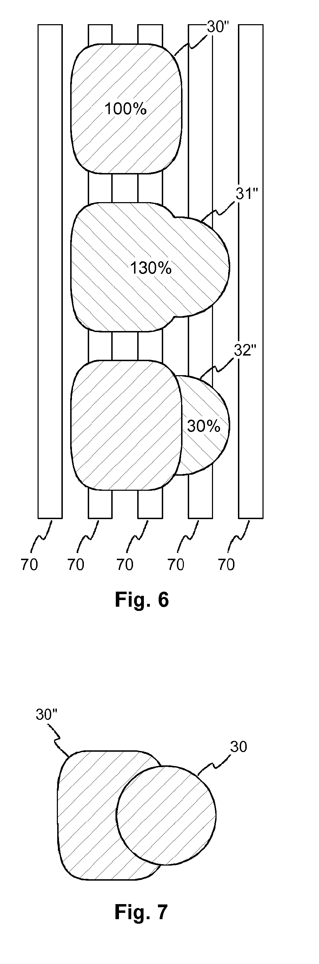

A pickup 1 of an apparatus according to the invention is schematically depicted in Fig. 2. The pickup 1 essentially corresponds to the pickup 1 of Fig. 1. However, in addition to the light source 2 for generating the first light beam 3, the pickup 1 according to the invention includes means 2' for generating a second light beam 3'. In the figure, the distance between the two light beams 3, 3' is shown in an exaggerated way. The detector 11 is adapted to detect also the reflected second light beam 9'. Of course, it is also possible to provide distinct optical paths for the generation and/or detection of the second light beam 3'. The means 2' for generating the second light beam 3' is, for example, an additional light source, an element for generating a wavelength shifted light beam, e.g. a second harmonic generator, or the like. The two light beams 3, 3' are focused onto the surface or one of the layers of the optical recording medium 8, preferably onto an information layer. The light spot resulting from the second light beam 3' has a different size than the light spot resulting from the first light beam 3. The larger of the two light spots encompasses the smaller of the two light spots. One possibility to achieve the overlap is to focus the two light spots on the same position of the optical recording medium 8. This corresponds to a real physical overlap. In this case, the two light beams 3, 3' preferably are mutually incoherent to avoid interference effects. Alternatively, the two light spots are focused on different positions of the optical recording medium 8. In this case the evaluation circuitry 12 temporally delays one of the resulting signals, so that due to the rotation of the optical recording medium 8 the two signals that are finally evaluated always result from the same position on the optical recording medium 8. The pickup 1 optionally includes a beam shaping element 13, e.g. a holographic optical element, for modifying the shape of one or both light beams 3, 3'. This allows to obtain a better signal to noise ration, as will be explained below with reference to Fig. 6.

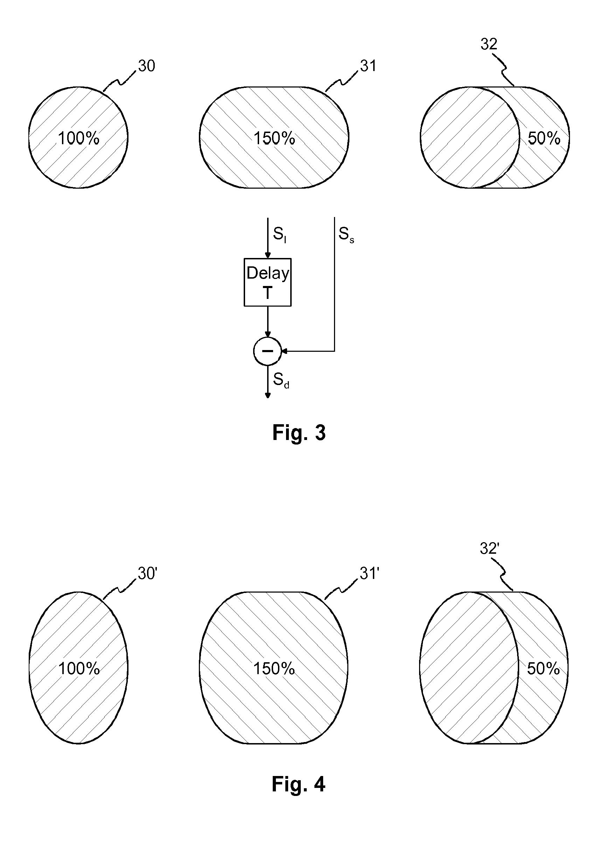

The superposition of two light spots 30, 31 of different size resulting from the light beams 3, 3' (not shown here) to obtain a light spot 32 of a reduced size is schematically illustrated in the upper part of Fig. 3. The area 32 of the larger light spot 31, which is not also covered by the smaller light spot 30, is used for reading out data contained in this area 32. In other words, by subtracting the reading signal Sₛ of the smaller light spot 30 from the reading signal Sₗ of the larger light spot 31, the reading signal S_{d} of the difference area 32 is obtained, i.e. S_{d}=Sₗ-Sₛ. This is illustrated schematically in the lower part of Fig. 3. The difference area 32 is not, or at least only to a reduced extent, dependent on the wavelength of the light beams 3, 3'. If the light spot 30 is the smallest light spot that can be achieved at the respective wavelength, and the width of the light spot 31 is increased by 50% relative to the minimum width, the difference area 32 has a width corresponding to 50% of the minimum width.

Fig. 4 illustrates a similar superposition of two light spots 30', 31' of different size to obtain a light spot 32'. However, in this example the light spots 30', 31' have an extended size in a track direction. This results in a non-circular shape of the light spots 30', 31' and to a slightly increased signal to noise ratio.

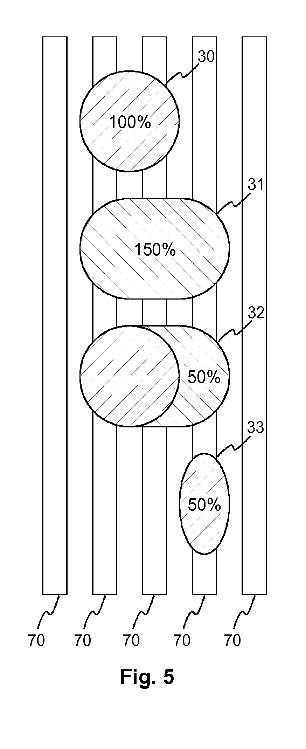

If the two spots 30, 31 are arranged in such way on the surface of the optical recording medium 8 that the difference area 32 is located on a track of the optical recording medium 8, a reduced track pitch can be realized. This means that the tracks can be arranged at a smaller distance relative to each other, which in turn results in an increased data density. This is visualized in Fig. 5, which shows the two light spots 30, 31, the superimposed light spots 30, 31 with the difference area 32, and a further light spot 33, which essentially corresponds to the difference area 32, relative to the tracks 70 of an optical recording medium 8. Of course, the different light spots 30, 31, 32, 33 are shown simultaneously for illustration purposes only. As can be seen, the smaller light spot 30 is too large to address a single track 70, as it overlaps with at least two tracks 70. In principle a light spot 33 as shown in the bottom of the figure would be necessary to read a single track 70. As such a light spot 33 cannot be realized at the respective wavelength, the second, broader light spot 31 is provided. The signal S_{d} of the difference area 32 is then generated from the signals Sₗ-Sₛ of the two light spots 31, 30 as S_{d}=Sₗ-Sₛ. In principle, the resulting signal S_{d} corresponds essentially to the signal obtained by the further light spot 33. However, the difference area 32 still encompasses small parts of the neighboring track.

In order to obtain a better overlap of the difference area 32 with the track 70 it is proposed to vary the shape of the light spots, so that there is a better overlap with the smaller light spot. This allows to ensure that interferences from the neighboring tracks are avoided. An example for such a variation of the spot shape is depicted in Fig. 6. The two light spots 30", 31" have a special shape. As can be seen, the difference area 32" does in this case no longer encompass parts of the neighboring track. This leads to an increased signal to noise ratio.

The special shape is achieved by extending the smaller light spot 30" parallel to the tracks 70. The larger light spot 31" has a similar shape, but with an additional lateral protrusion. In other words, the shape of the larger light spot 31" corresponds approximately to the envelope of the superposition of the smaller light spot 30" and the light spot 30 of Fig. 5, where the latter is shifted sideways by one track pitch. This superposition is illustrated in Fig. 7.

In the following the detection of the resulting signals shall be briefly explained. According to a first approach the two light spots 30", 31" physically overlap on the surface of the optical recording medium 8, i.e. the two light beams 3, 3' are simultaneously focused on the same position. This results in the overlapping light spots illustrated in the bottom of Fig. 6, having a difference area 32".

When this approach is used, the signals of the reflected light beams 9, 9' can easily be separated as the two light beams 3, 3' have different wavelengths. In addition, the two light beams 3, 3' may have different directions of polarization, or are alternatingly switched on and off, i.e. if they are operated in time multiplex. As the two light beams 3, 3' have different wavelengths, the two light beams 3, 3' can easily be directed towards different detectors 11.

According to a different approach, the two light beams 3, 3' are focused to different positions on the optical recording medium 8. If both resulting light spots 30", 31" are located close to each other, the following light spot 30", 31" reaches the position of the preceding light spot 30", 31" after a short time due to the movement of the optical recording medium 8. This means that a virtual overlap of the two light spots 30", 31" is achieved by subtracting the signal of the following light spot 30", 31" from the delayed signal of the preceding light spot 30", 31". In other words, the resulting signal is S_{d}(t)=Sₗ(t)-Sₛ(t-T). T is the time that is necessary for rotating the optical recording medium 8 by such an angle that the following light spot 30", 31" has reached the position of the preceding light spot. T is either positive or negative, depending on which of the light spots 30", 31" is the following light spot and which is the preceding light spot. The order of the two light spots 30", 31" can be chosen at will. It is even possible to focus the light beams 3, 3' a second time onto the optical recording medium 8 in order to increase the signal to noise ratio. In this case (assuming that all light spots are arranged at equal distances) the resulting signal is 2S_{d}(t)=S₁₁(t)-Sₛ₁(t-T)+Sₗ₂(t-2T)-Sₛ₂(t-3T). However, this leads to a more complicated optical system, as four light spots would have to be generated simultaneously.

In order to compensate for a non-uniform illumination of the light spots 30", 31", e.g. due to tolerances of the system or technical constraints, a correction factor k is advantageously introduced into the calculation of the difference signal, i.e. S_{d}=Sₗ-K·Sₛ. The correction factor k may depend on the optical recording medium 8 or even on the material of the optical recording medium 8. Therefore, the correction factor k is preferably determined by the optical drive, e.g. by evaluating an identifier of the optical recording medium 8 obtained from a lead-in of the optical recording medium 8. The correction factors k of different optical recording media are advantageously provided in a table included in the drive firmware. Based on the retrieved identifier the optical drive is then able to choose the appropriate correction factor k.

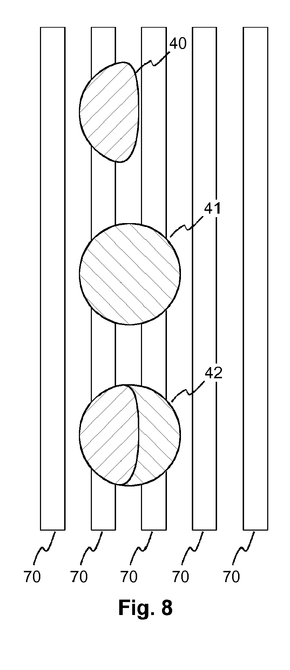

Fig. 8 illustrates a further superposition of two light spots 40, 41 on the surface of the optical recording medium 8. In this example two different light sources with different wavelengths are used for deriving the difference signal. Many of today's optical drives include two or more light sources in order to be able to read from or to write to different types of optical recording media. For example, Blu Ray players generally include a first light source generating a blue light beam and a second light source for generating a red light beam. In Fig. 8 a light spot 40, which is generated with the light beam having the shorter wavelength, encompasses a fraction of a light spot 41, which is generated with the light beam having the longer wavelength. The superposition of both light spots 40, 41 results in the difference area 42 depicted in the bottom of the figure.

In this example the light spot 40 of the shorter wavelength is sufficiently small to read a single track 70. This makes it possible to read two tracks 70 at a time. The first track 70 is read with the light spot 40 of the shorter wavelength, the second track 70 is read using the superposition of the two light spots 40, 41. The doubled data rate is especially advantageous if the optical recording medium 8 has a double-track structure, i.e. a spiral of two tracks. In case of a conventional track structure having a spiral of a single track, it is sufficient to perform a jump by one track after finishing one rotation of the optical recording medium 8. At each jump the signal paths need to be switched, as after the track jump the light spot formerly used for reading the former inner track needs to continue reading the former outer track. The switching has to be sufficiently fast to avoid the loss of channel bits. However, some losses of channel bits can be tolerated and compensated by the available error correction mechanisms.

## Claims

1. Apparatus for reading data from an optical recording medium (8), having:
- a light source (2) for generating a first light beam (3);
- means (2') for generating a second light beam (3');
- one or more focusing means (7) for focusing the first light beam (3) and the second light beam (3') onto the optical recording medium (8) to form a first light spot (30, 30', 30", 40) and a second light spot (31, 31', 31", 41), wherein the second light spot (31, 31', 31", 41) is larger than the first light spot (30, 30', 30", 40) and physically and/or virtually encompasses the first light spot (30, 30', 30", 40);
- one ore more detectors (11) for detecting a first light beam (9) and a second light beam (9') reflected by the optical recording medium (8); and
- means for generating a data signal from the difference between the detected first and second reflected light beams (9, 9');
**characterized in that**
the second light beam (3') has a different wavelength than the first light beam (3).

2. Apparatus according to claim 1, **wherein** the means (2') for generating the second light beam (3') is a further light source or an element for generating a wavelength shifted light beam.

3. Apparatus according to claim 1 or 2, **further** having means (13) for reducing an interference from neighboring tracks (70) in the data signal.

4. Apparatus according to claim 3, **wherein** the means (13) for reducing an interference from neighboring tracks (70) in the data signal is a beam shaping element (13) for modifying the shape of the first light spot (30, 30', 30", 40) and/or the second light spot (31, 31', 31", 41).

5. Apparatus according to one of claims 1 to 4, **having** means for generating a further data signal from the detected first reflected light beam (9).

6. Apparatus according to one of claims 1 to 5, **wherein** the virtual encompassing of the first light spot (30, 30', 30", 40) by the second light spot (31, 31', 31", 41) is achieved by a delay element for generating a delay between the signal obtained from the first reflected light beam (9) and the second reflected light beam (9').

7. Method for reading from an optical recording medium (8), having the steps of:
- generating a first light beam (3) and a second light beam (3');
- focusing the first light beam (3) and the second light beam (3') onto the optical recording medium (8) to form a first light spot (30, 30', 30", 40) and a second light spot (31, 31', 31", 41), wherein the second light spot (31, 31', 31", 41) is larger than the first light spot (30, 30', 30", 40) and physically and/or virtually encompasses the first light spot (30, 30', 30", 40);
- detecting a first light beam (9) and a second light beam (9') reflected by the optical recording medium (8); and
- generating a data signal from the difference between the detected first and second reflected light beams (9, 9');
**characterized in that**
the second light beam (3') has a different wavelength than the first light beam (3).

8. Method according to claim 7, **further** having the step of reducing an interference from neighboring tracks (70) in the data signal.

9. Method according to claim 8, **wherein** the step of reducing an interference from neighboring tracks (70) in the data signal includes modifying the shape of the first light spot (30, 30', 30", 40) and/or the second light spot (31, 31', 31", 41).

10. Method according to one of claims 7 to 9, **further** having the step of generating a further data signal from the detected first reflected light beam (9).

11. Method according to one of claims 7 to 10, **having** the step of generating a delay between the signal obtained from the first reflected light beam (9) and the second reflected light beam (9').
